# EUROPEAN PATENT APPLICATION

(11) **EP 1 775 218 A1**
(43) Date of publication of application: **18.04.2007**
(21) Application number: 05109438.1
(22) Date of filing: 11.10.2005
(51) Int. Cl.: B64F 5/00

(54) **De-icing of aircraft**

(71) Applicant: Safeaero i Trelleborg AB, 231 21 Trelleborg (SE)
(72) Inventor: Herrström, Curt, 231 21 Trelleborg (SE)
(74) Representative: Akerman, Marten Lennart

(57) **Abstract**

A vehicle for de-icing of aircraft comprising a vehicle chassis unit (105) carrying a crane unit (108), said cranc unit (108) comprising an extendable boom (110) being erectable, the boom being provided with a cabin (115) for an operator to sit in at the booms farther end, the cabin (115) is provided with an extendable telescopic arm (120) erectable in elevation angles, the telescopic arm (120) is provided with a spray nozzle (130) at its farther end, said nozzle being provided with means (125) for rotating said nozzle around a first nozzle rotation axis, and means for rotating said nozzle around a second nozzle rotation axis second axis, said axis being substantially orthogonal, the vehicle is further provided with means for housing and providing de-icing fluid to said spray nozzle, such that the de-icing fluid can be sprayed, on operator command, over an object to be de-iced, where said vehicle is provided with means for automatically sweeping the nozzle (130, 260) from side to side between a first end position and a second end position.

## Description

### Field of invention

The present invention refers to the field of de-icing aircrafts. In particular it refers to means and methods for de-icing aircrafts by the aid of a spray nozzle head movably arranged on a vehicle.

### Background

In the air transport industry it is important to have a well functioning de-icing capability in the winter months. For the air safety it is essential that aircraft wing surfaces are fully cleared, which means clear of snow, ice, slush or frost. Any icing would affect the aerodynamics of an aircraft and its ability to fly especially during take off.

The adverse effects of so called precipitation may reduce the wing lift up to 25%. Furthermore, snow and ice affect the controllability and alter aircraft flight characteristics: ailerons and flaps freeze up, it may cause turbine failure, failure regarding the retractable gears, ice particles may break away and cause damage to the aircraft or fall to the ground, frozen up sensors can cause errors in critical instrument readings.

For airline companies it is also important that ground time is kept to a minimum to reduce the costs of having the aircraft standing idle.

Therefore, there is a need for careful and swift de-icing.

### Summary of the invention

Vehicles provided with a turnable telescopic boom, having a cabin at its farther end, and with the cabin being provided with an arm having a spray nozzle attached to it, are known in the field, e.g SDI 213 from SAFEAERO (Trelleborg, Sweden). The present invention concerns a spray nozzle head useable by such a vehicle, and means and methods for automatically and semi-automatically conduct effective de-icing. The spray nozzle head comprises a spray nozzle, means for pivoting/rotating the spray nozzle in different directions, and fastening means for fastening the head to the arm, and connections for supplying the nozzle with deicing fluid. Further, the means for pivoting the spray nozzle are connected to a spray nozzle control system, from which an operator can control the operation of the nozzle. With the aid of said means and control system the nozzle can be set to assume different angles with reference to the horizontal plane. Preferred angles are +70 degrees to -120 degrees. The nozzle is provided with means so that it can also be set to automatically sweep from left to right and back in a continuous motion, when spraying is activated when an operator engages a control organ, e.g. when he/she presses a spray activation button. Preferred sweeping angles include from 70 degrees left to 70 degrees right. Further, the spray nozzle control system comprises a joystick/handle and suitable electronics and software, such that an operator movement of a joystick/handle is mimicked by the nozzle. Means are provided to automatically or semi-automatically, upon operator command, sweep the spray nozzle continuously from left to right, or continuously from an angle pointing upwards, to an angle pointing downwards. Means are also provided for automatic forward and backward translation of the spray nozzle head, or even automatic sideways translation of the spray nozzle head. Means are also provided to combine two or even three automatic movements. The automatic movements can be preprogrammed or be "taught" to a movement learning system. The benefits of the invention are faster and more accurate de-icing with less need for de-icing liquid.

Thus, the present invention concerns a vehicle for de-icing of aircrafts comprising a vehicle chassis unit carrying a crane unit, said crane unit comprises an extendable boom being eractable in boom elevation angles, the boom being provided with a cabin for an operator to sit in, at the booms farther end, the cabin is provided with an extendable telescopic arm optionally erectable in elevation angles, the telescopic arm is provided with a spray nozzle at its farther end, said nozzle being provided with means for rotating said nozzle around a first nozzle rotation axis, and means for rotating said nozzle around a second nozzle rotation axis, said axis being substantially orthogonal, the vehicle is further provided with means for housing and providing de-icing fluid to said spray nozzle, such that the de-icing fluid can be sprayed, on operator command, over an object to be de-iced where said vehicle is provided with means for automatically sweeping the nozzle from side to side between a first end position and a second end position.

Said vehicle also comprises means to activate the automatic sweeping only when spraying is activated by the operator. The vehicle may further comprise means for the operator to set a first and second end position.

The vehicle further comprising means for automatically achieving a zigzag type spraying pattern, or a rectangular type spraying pattern.

The vehicle further comprising means for manually overriding automatic spraying.

The vehicle further comprising means for learning and storing a spraying pattern.

### Brief description of the drawings

These and other features, aspects and advantages of the present invention will become better understood with reference to the following description, appended claims, and accompanying drawings where
Fig. 1 shows a de-icing vehicle according to prior art.
Fig. 2a-d show an overview over a large aircraft and possible preferred positions for a de-icing vehicle.
Fig. 2e and 2f show a spray nozzle head from the side and from above, respectively.
Fig. 3a-b are block diagrams showing units of a preferred embodiment of a control and actuating system for de-icing.
Fig. 4 is a flowchart for a method of applying de-icing fluid over a substantially horizontal surface.
Fig. 5 is a flowchart for a method of applying de-icing fluid over a substantially horizontal surface from beneath.
Fig. 6 is a flowchart for a method of applying de-icing fluid over a substantially vertical surface.
Fig. 7a-b show different sweep-patterns of de-icing fluid.

### Detailed description of preferred embodiments

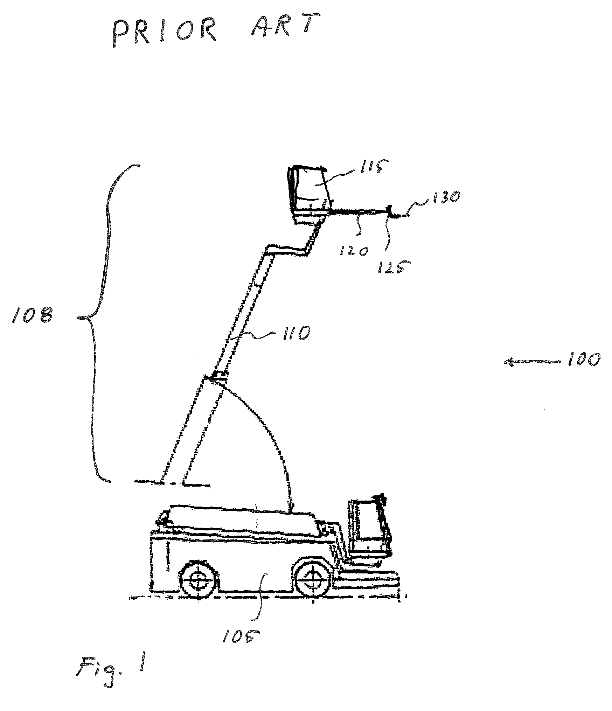

Fig. 1 shows a prior art de-icing vehicle 100 comprising a chassis 105, fitted with a main boom 110. At the end of the main boom 110 is fitted a cabin 115 having a telescopic arm 120. At the end of the telescopic arm 120 is fitted a spray nozzle head 125 provided with a spray nozzle 130.

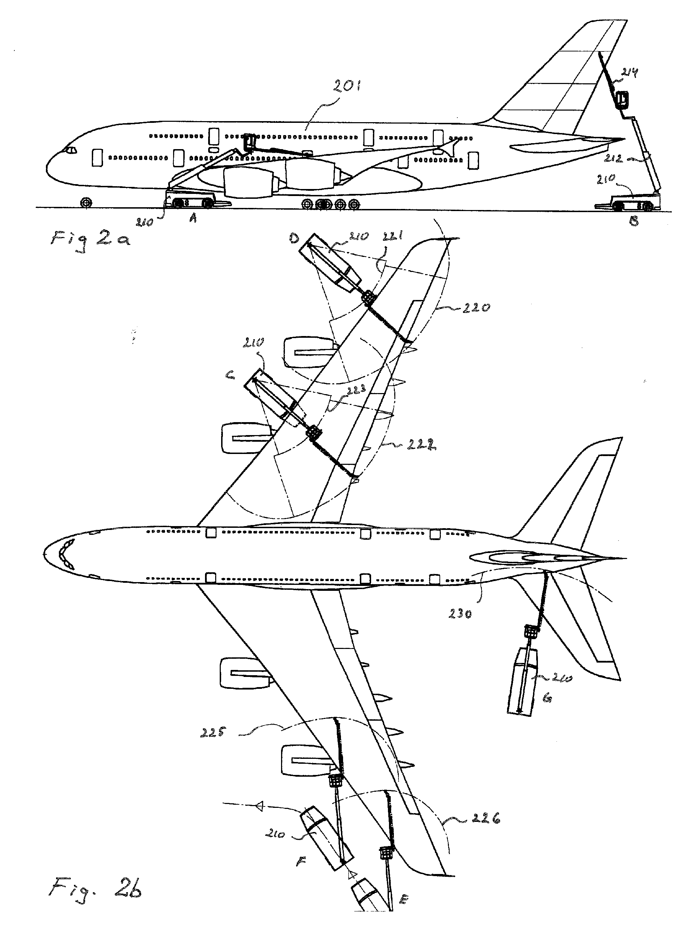

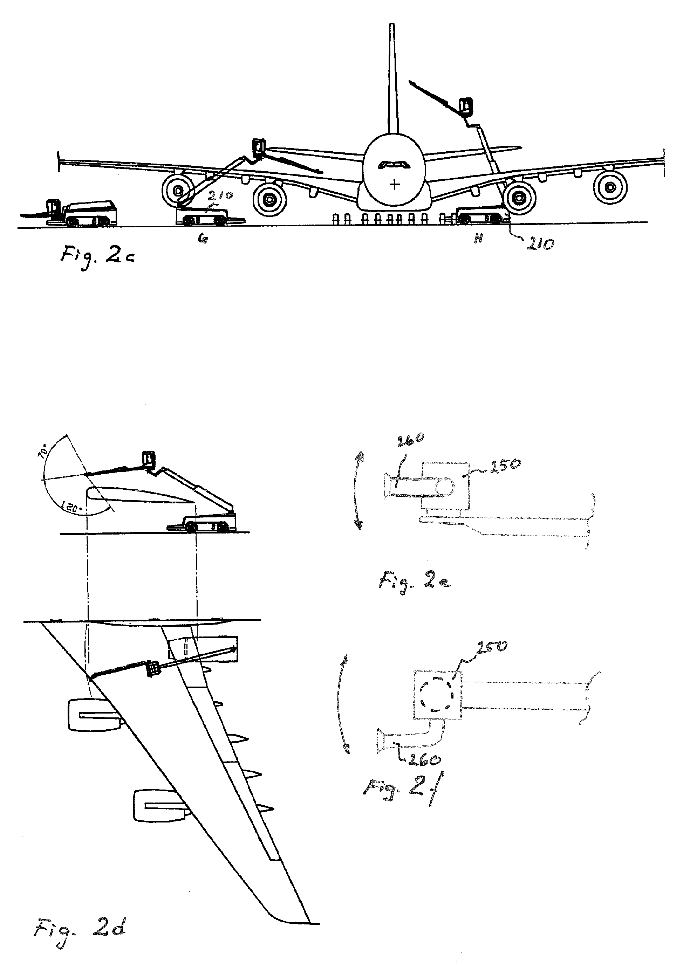

Fig. 2a-d show an overview over a large aircraft 201 and possible preferred positions A, B, C, D, E, F for a de-icing vehicle 210. Fig. 2a shows a side view and fig 2b shows a view from above. Dash-dotted lines 220, 221, 222, 223, 225, 226, 230 indicate range of movement for main boom 212 and telescopic arm 214. Fig. 2c shows a front view of the aircraft 201, and further suitable positions G and H for de-icing vehicle 210. Suitable angles and extensions of boom and arm can also be seen. Fig. 2d shows a de-icing vehicle and range of up/down elevation motion of spray nozzle. Preferred range is +70 to -120 degrees, with reference to longitudinal axis of telescopic arm. Fig. 2e is a blow-up of fig. 2d of a spray nozzle head 250 seen from the side, said spray nozzle head is provided with means for up/down movement of said nozzle. Fig. 2f shows the spray nozzle head 250 of fig. 2e from above, with a spray nozzle 260, said spray nozzle head 250 is provided with means for right to left movement of the nozzle 260.

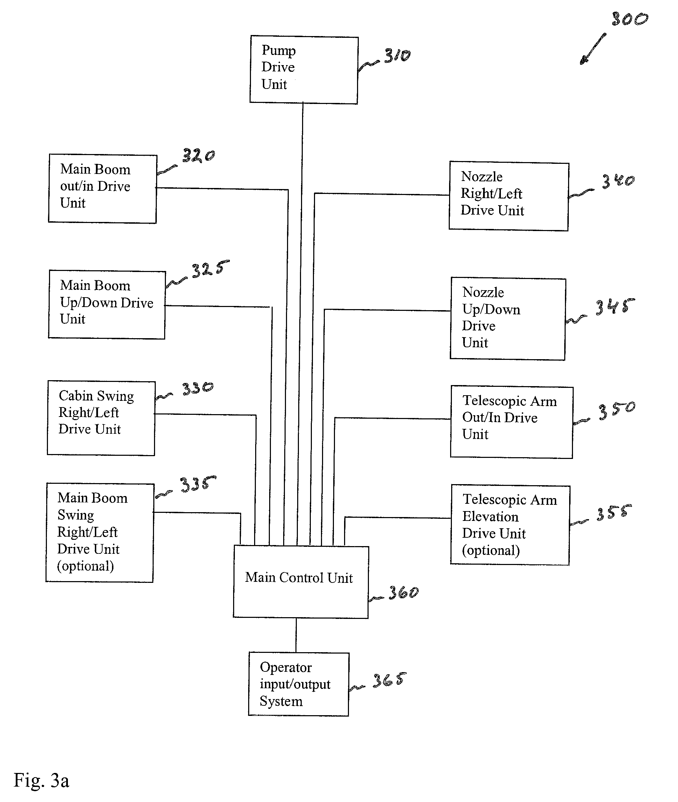

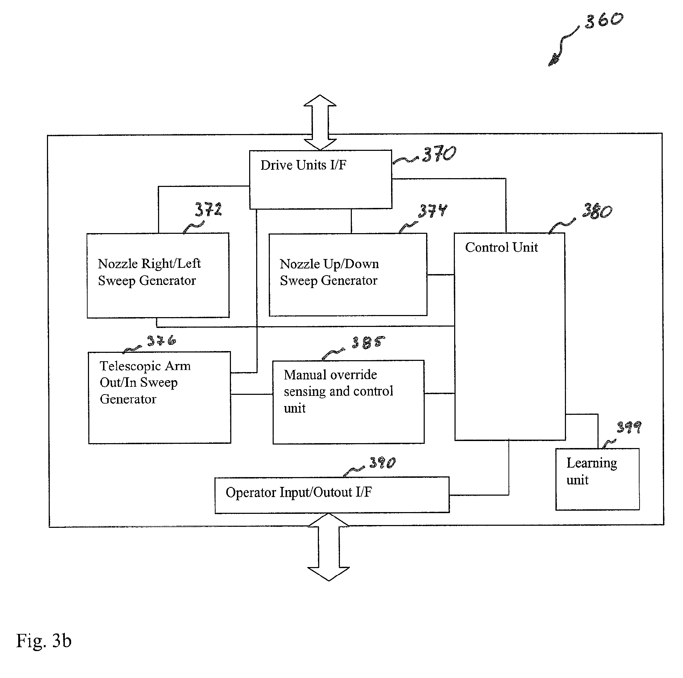

Fig. 3a and fig. 3b are block diagrams showing units of a preferred embodiment of a control and actuating system 300 for de-icing. An operator input/output system 365 is connected to a main control unit 360. Said main control unit 360 is connected to drive units 310, 320, 325, 330, 340, 345, 350 for driving the motion of boom, nozzle, telescopic arm, pump and cabin. That is, the main control unit 360 is connected to a pump drive unit 310 for driving a pump to pressurise and deliver de-icing fluid to the nozzle, a main boom out/in drive unit 320 for driving the main boom in and out, a main boom up/down drive unit 325 for driving the main boom up and down , a cabin swing right/left drive unit for slewing the cabin to left and right, a nozzle right/left drive unit 340 for driving the nozzle to right and left, a nozzle up/down drive unit 345 for driving the nozzle up and down, a telescopic arm in/out drive unit 350 for driving the telescopic arm in and out.

In a further embodiment there may also be provided for, and connections to a main boom swing right/left drive unit 335, and/or a telescopic arm elevation drive unit 355 for rotating the main boom to left and right, and for raising and lowering of the telescopic arm, respectively.

The operator input/output system 365 may preferably comprise a left hand joystick for controlling main boom and cabin, and a right hand joystick for controlling nozzle movement, spraying on/off, and the telescopic arm. Further it preferably comprises switches or operator panels for different settings.

Fig. 3b shows the main control unit 360 in greater detail. The main control unit is provided with a control unit 380 which control unit 380 is connected to an operator input/output interface 390, and a drive unit interface 370, for interfacing with operator controls and displays and the drive units mentioned above, respectively. The main control unit is further provided with a number of sweep generators 372, 374, 376 for generating sweep signals for relieving the operator of manually having to control the nozzle and arm. Specifically, there are provided a nozzle right/left sweep generator 372, a nozzle up/down sweep generator 374, and a telescopic arm out/in sweep generator 376, all three being connected to the control unit 380, and the drive units interface 370. The individual sweep generators are arranged to be engaged, based on operator settings, when spraying is activated, see further below.

In another embodiment the main control unit may be provided with a manual override sensing and control unit 385 for sensing, during automatic sweeping, if the operator is trying to override said automatic sweeping by forcing an operator control organ, e.g a joystick to a position out of a neutral position for said joystick. If such a forcing is sensed, the manual override and control unit will send a signal to the control unit 380 to switch off an automatic mode.

In still another embodiment the main control unit 360 may be provided with a learning unit 399. The learning unit is provided with means to set the system in a learning mode where it is possible for an operator to store a manually performed movement pattern in a memory (not shown) of said learning unit 399. This stored movement pattern can then be automatically repeated on operator command.

The main control unit may also be provided with a boom swing right/left sweep generator and/or more sweep generators for generating sweep signals for creating automatic sweep of the vehicle part in question.

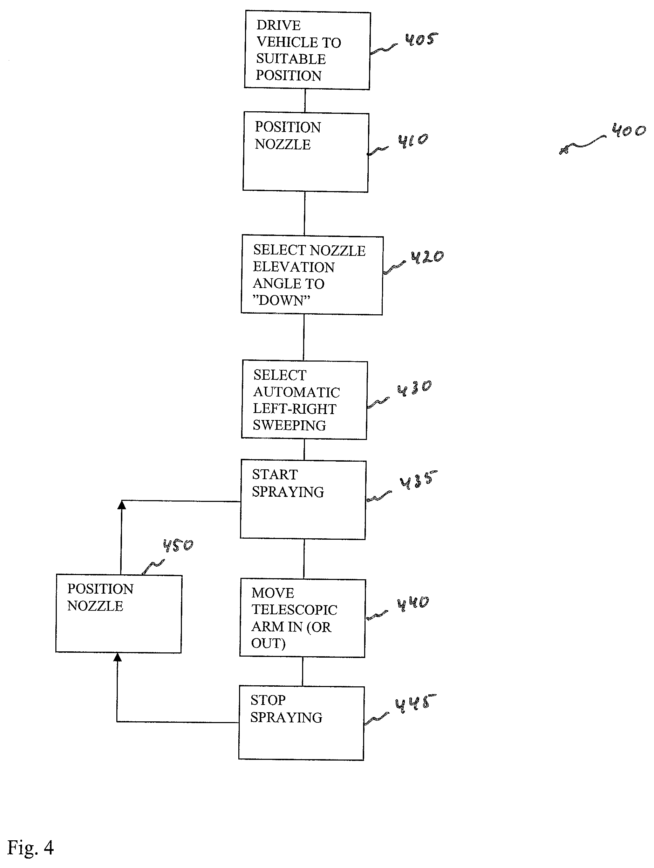

Fig. 4 is a flowchart for a method 400 of applying de-icing fluid over a substantially horizontal surface. The method 400 comprises the following steps:
- Driving 405 a de-icing vehicle to a suitable position near an aircraft to be de-iced;
- Manually positioning 410 the nozzle 250 by means of manoeuvring telescopic arm and main boom;
- Selecting 420 nozzle elevation angle (up/down) to a downward pointing angle;
- Selecting 430 automatic left/right sweeping;
- Activating 435 spraying by activating pump drive unit 310;
- Manually driving 440 telescopic arm in or out, to cover surface to be de-iced; - Stopping 445 spraying by deactivating pump drive unit 310;
- Manually positioning nozzle to a new position.
The four last steps 435, 440, 445, 450 is preferably repeated until a suitable area reachable from current vehicle position is sprayed.

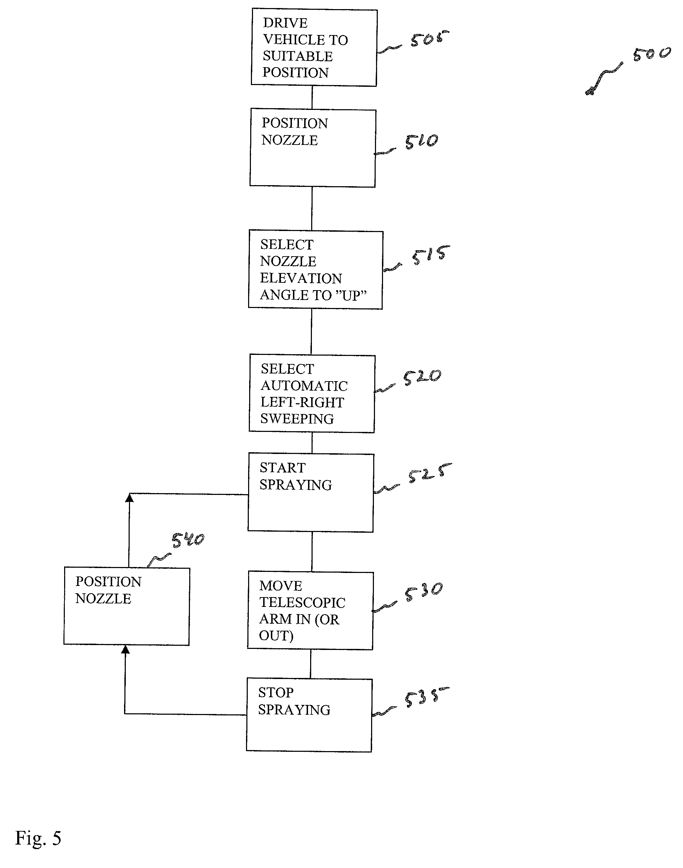

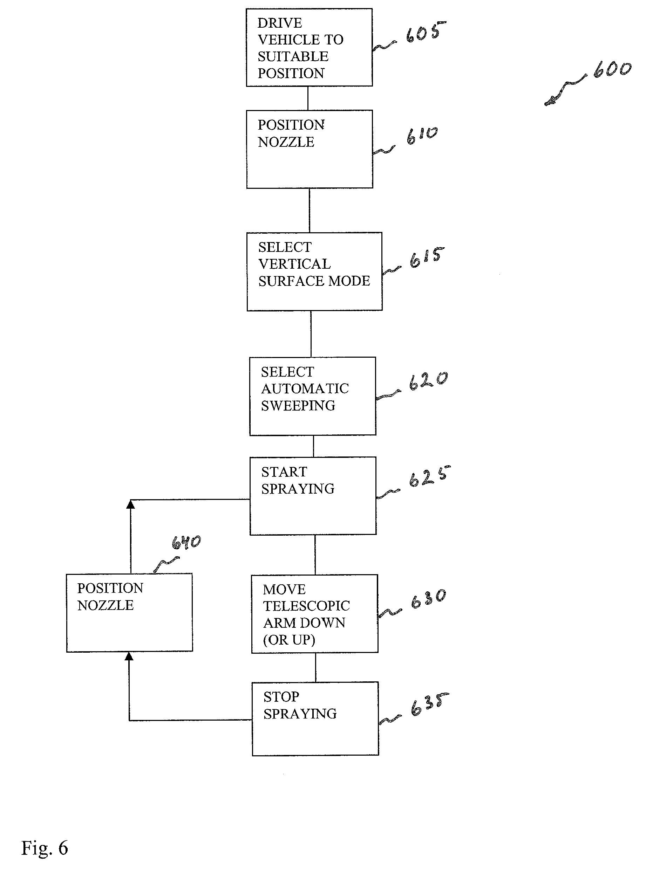

Fig. 5 is a flowchart for a method 500 of applying de-icing fluid over a substantially horizontal surface from beneath. The method 500 comprises the following steps:
- Driving 505 a de-icing vehicle to a suitable position near an aircraft to be de-iced;
- Manually positioning 510 the nozzle 250 by means of manoeuvring telescopic arm and main boom;- Selecting 515 nozzle elevation angle (up/down) to an upward pointing angle; - Selecting 520 automatic left/right sweeping; - Activating 525 spraying by activating pump drive unit 310; - Manually driving 530 telescopic arm in or out, to cover surface to be de-iced;
- Stopping 535 spraying by deactivating pump drive unit 310; Further, the method may comprise the step: -Manually positioning nozzle to a new position. Fig. 6 is a flowchart for a method 600 of applying de-icing fluid over a substantially vertical surface. The method 600 comprises the following steps:
- Driving 605 a de-icing vehicle to a suitable position near an aircraft to be de-iced;
- Manually positioning 610 the nozzle 250 by means of manoeuvring telescopic arm and main boom;
- Selecting 615 a vertical surface mode;
- Selecting 620 automatic sweeping;
- Activating 625 spraying by activating pump drive unit 310;
- Manually driving 630 telescopic arm to cover surface to be de-iced;
- Stopping 635 spraying by deactivating pump drive unit 310; Further, the method may comprise the step:
- Manually positioning 640 nozzle to a new position.

In another embodiment the method also comprises automatic sweeping of other vehicle parts than the nozzle. For example, automatic nozzle right/left sweeping can be combined with automatic telescopic arm in/out movement for deicing e.g. a wing or part of a wing. Automatic nozzle up/down sweeping can be combined with main boom right/left movement also for deicing e.g. a wing.

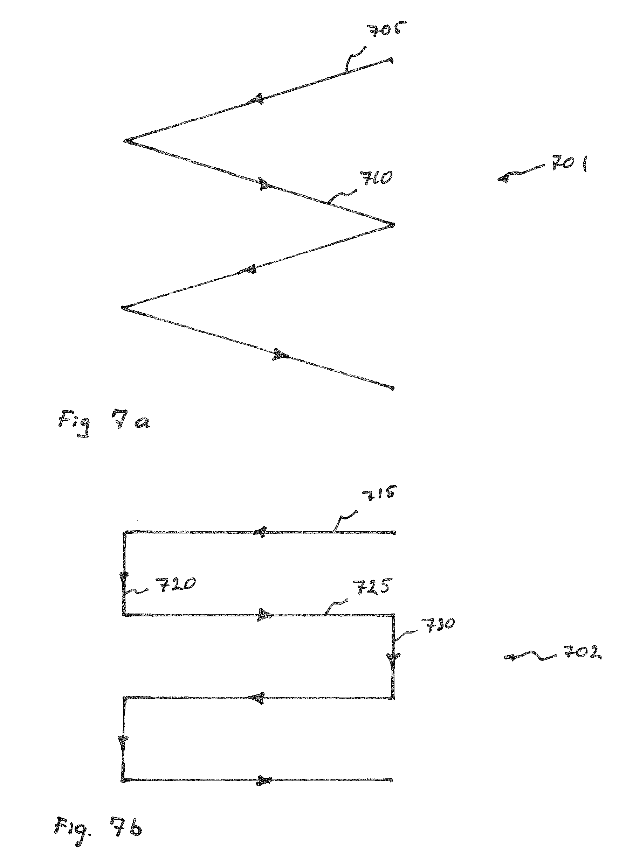

Fig. 7a-b shows different sweep-patterns of de-icing fluid. In a preferred embodiment, the main control unit may comprise means for synchronising manual and/or automatic telescopic arm movement with automatic nozzle movement as controlled from nozzle right/left sweep generator, such that a zigzag spray pattern 701 is achieved. Means are also provided for synchronising manual and/or automatic telescopic arm movement with automatic nozzle movement as controlled from nozzle right/left sweep generator, such that a rectangular spray pattern 702 is achieved, comprising a number of parallel legs 715, 720. The parallel legs 715, 725 is connected with connection legs 720, 730, during which connection legs spraying may be active or inactive.

## Claims

1. A vehicle for de-icing of aircrafts comprising a vehicle chassis unit (105) carrying a crane unit (108), said crane unit (108) comprising an extendable boom (110) being eractable in boom elevation angles, the boom being provided with a cabin (115) for an operator to sit in at the booms farther end, the cabin (115) is provided with an extendable telescopic arm (120) erectable in elevation angles, the telescopic arm (120) is provided with a spray nozzle (130) at its farther end, said nozzle being provided with means (125) for rotating said nozzle around a first nozzle rotation axis, and means for rotating said nozzle around a second nozzle rotation axis, said axes being substantially orthogonal, the vehicle is further provided with means for housing and providing de-icing fluid to said spray nozzle, such that the de-icing fluid can be sprayed, on operator command, over an object to be de-iced **characterised in that** said vehicle is provided with means (372) for automatically sweeping the nozzle (130, 260) from side to side between a first end position and a second end position.

2. The vehicle of claim 1 **characterised in that** said vehicle comprises means to activate the automatic sweeping only when spraying is activated by the operator.

3. The vehicle of claim 2 **characterised in that** said vehicle comprises means for the operator to set said first and second end position.

4. The vehicle of claim 3 **characterised in that** said vehicle comprises means for automatically achieving a zigzag type spraying pattern.

5. The vehicle of claim 3 **characterised in that** said vehicle comprises means for automatically achieving a rectangular type spraying pattern.

6. The vehicle of claim 3 **characterised in that** said vehicle comprises means for manually overriding automatic spraying.

7. The vehicle of claim 3 **characterised in that** said vehicle comprises means for learning and storing a spraying pattern.

8. A method useable for applying deicing fluid over a surface using a vehicle of claim 2 comprising the following steps:
- driving deicing vehicle to a suitable position near an aircraft to be deiced;
- manually positioning a nozzle by means of manoeuvring a telescopic arm and a main boom;
- selecting nozzle elevation angel (up/down) to a downward pointing angle;
- selecting automatic left/right sweeping;
- activating spraying by activating pump drive unit;
- manually driving telescopic arm in or out, to cover surface to be deiced;
- stopping spraying by deactivating pump drive unit.

9. A vehicle comprising a vehicle chassis carrying a crane unit being provided with a spray nozzle at a farther end, said nozzle being rotatable around a first and a second axis **characterised in that** said vehicle is provided with means (372) for automatically sweeping the nozzle (130, 260) from side to side between a first end position and a second end position.
